(19) Europäisches Patentamt
European Patent Office
Office européen des brevets

(11) **EP 2 787 737 A1**

(12) **EUROPEAN PATENT APPLICATION**

(43) Date of publication:
08.10.2014 Bulletin 2014/41

(51) Int Cl.:
*H04N 19/169* (2014.01)    *H04N 19/122* (2014.01)
*H04N 19/192* (2014.01)    *H04N 19/645* (2014.01)

(21) Application number: 14162903.0

(22) Date of filing: 31.03.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 02.04.2013  US 201361807671 P
31.01.2014  US 201414170320

(71) Applicant: **Samsung Display Co., Ltd.**
**Gyeonggi-Do (KR)**

(72) Inventor: **Lu, Ning**
**San Jose, CA California 95112 (US)**

(74) Representative: **Mounteney, Simon James**
**Marks & Clerk LLP**
**90 Long Acre**
**London**
**WC2E 9RA (GB)**

(54) **Hierarchical image and video codec**

(57)   A hierarchical system and method of encoding and compressing image data, or video data including a sequence of images. In one embodiment, a line buffer is used to hold a line of an image, and as the second line of the image is read from the input data stream, 2x2 blocks of the image are transformed, e.g., by a Hadamard transform. Each transform results in a low-frequency component and three high-frequency component. The high-frequency components are encoded, e.g., using entropy coding, and sent out to the output bit stream. The low-frequency components are pushed to the line buffer. This process is continued until enough low-frequency components have been formed to complete a 2x2 block of low-frequency components, which is then transformed. The process may be repeated hierarchically for multiple layers.

*FIG. 1*

## Description

## FIELD

The following description relates to a system and method for encoding digital image data and more particularly to a hierarchical approach to coding of video data.

## BACKGROUND

Video data streams consist of sequences of images and contain high data volumes. Such data streams may be encoded, e.g., compressed to reduce channel capacity requirements. Scalable video coding is commonly used for producing a compressed video in multiple-layer format, which may be used for applications that need to support devices of various resolutions. Each image layer in such a format is an independent bit stream corresponding to the data needed to produce a particular resolution as an enhancement from the previous lower resolution. In a system employing such a format, each device need only decode up to the resolution it needs.

In related-art implementations, an image is split into pixel regions that corresponding to a single pixel in the lowest resolution. For example, for H.265 (HEVC) these regions may be 32x32 blocks within the image. As result, the encoder cannot start encoding until at least 31 lines are available to the encoder, e.g., having been read into a buffer, which may be referred to as a line buffer, from the input video stream. This results in burdensome requirements on the hardware used to encode the video stream, and increased cost. Thus, there is a need for a system and method for encoding video which has reduced requirements for buffer space.

The above information disclosed in this Background section is only for enhancement of understanding of the background of the invention and therefore it may contain information that does not form the prior art that is already known in this country to a person of ordinary skill in the art.

## SUMMARY

An aspect of an exemplary embodiment of the present invention includes a hierarchical system and method of encoding and compressing image data, or video data including a sequence of images. In one embodiment, a line buffer is used to hold a line of an image, and as the second line of the image is read from the input data stream, 2x2 blocks of the image are transformed, e.g., by a Hadamard transform. Each transform results in a low-frequency component and three high-frequency component. The high-frequency components are encoded, e.g., using entropy coding, and sent out to the output bit stream. The low-frequency components are pushed to the line buffer. This process is continued until enough low-frequency components have been formed to complete a 2x2 block of low-frequency components, which is then transformed. The process may be repeated hierarchically for multiple layers.

According to an embodiment of the present invention there is provided a method for encoding an image, the method including: processing a plurality of rows of image elements of a first kind, one N by N block at a time, N being an integer greater than 1, with a transform, wherein the transform is configured to form a plurality of first high-frequency components and one first low-frequency component; for each N by N block, encoding the first high-frequency components and storing the first low-frequency component; processing the first low-frequency components, one M by M block at a time, M being an integer greater than 1, with the transform, wherein the transform is configured to form a plurality of second high-frequency components and one second low-frequency component; and for each M by M block, encoding the second high-frequency components and storing the second low-frequency component.

In one embodiment, each image element of the first kind is a pixel value.

In one embodiment, each image element of the first kind is a low-frequency component obtained by applying a transform to an array of pixel values.

In one embodiment, the transform is a Hadamard transform.

In one embodiment, the transform is a discrete cosine transform.

In one embodiment, the transform is a wavelet transform.

In one embodiment, M equals 2.

In one embodiment, N equals 2 and M equals 2.

In one embodiment, the encoding of the first high-frequency components includes encoding the first high-frequency components with an entropy coding.

In one embodiment, the encoding of the second high-frequency components includes encoding the second high-frequency components with an entropy coding.

In one embodiment, N equals 2, and each N by N block has four image elements, including: a first image element; a second image element; a third image element; and a fourth image element.

In one embodiment, the low-frequency component is a constant multiplied by the sum of the four image elements.

In one embodiment, the constant is one-half.

In one embodiment, a high-frequency component is a constant multiplied by the difference between: the sum of the first image element and the second image element; and the sum of the third image element and the fourth image element.

In one embodiment, the constant is one-half.

In one embodiment, a high-frequency component is a constant multiplied by the difference between: the sum of the first image element and the third image element; and the sum of the second image element and the fourth image element.

In one embodiment, the constant is one-half.

In one embodiment, a high-frequency component is a constant multiplied by the difference between: the sum of the first image element and the fourth image element; and the sum of the second image element and the third image element.

In one embodiment, the constant is one-half.

According to an embodiment of the present invention there is provided a system for encoding an image, the system including a processing unit configured to: process a plurality of rows of image elements of a first kind, one N by N block at a time, N being an integer greater than 1, with a transform, wherein the transform is configured to form a plurality of first high-frequency components and one first low-frequency component; for each N by N block, encode the first high-frequency components and store the first low-frequency component; process the first low-frequency components, one M by M block at a time; M being an integer greater than 1, with the transform, wherein the transform is configured to form a plurality of second high-frequency components and one second low-frequency component; and for each M by M block, encode the second high-frequency components and store the second low-frequency component.

## BRIEF DESCRIPTION OF THE DRAWINGS

These and other features and advantages of the present invention will be appreciated and understood with reference to the specification, claims and appended drawings wherein:

> FIG. 1 is a block diagram showing elements of a system for encoding images according to an embodiment of the present invention;
> FIG. 2 is a flowchart illustrating aspects of a method of encoding images according to an embodiment of the present invention;
> FIG. 3 is a flowchart illustrating aspects of a method of encoding images according to an embodiment of the present invention; and
> FIG. 4 is a block diagram showing a system employing a codec according to an embodiment of the present invention.

## DETAILED DESCRIPTION

The detailed description set forth below in connection with the appended drawings is intended as a description of exemplary embodiments of a hierarchical image and video codec provided in accordance with the present invention and is not intended to represent the only forms in which the present invention may be constructed or utilized. The description sets forth the features of the present invention in connection with the illustrated embodiments. It is to be understood, however, that the same or equivalent functions and structures may be accomplished by different embodiments that are also intended to be encompassed within the spirit and scope of the invention. As denoted elsewhere herein, like element numbers are intended to indicate like elements or features. Expressions such as "at least one of," when preceding a list of elements, modify the entire list of elements and do not modify the individual elements of the list. Further, the use of "may" when describing embodiments of the present invention refers to "one or more embodiments of the present invention".

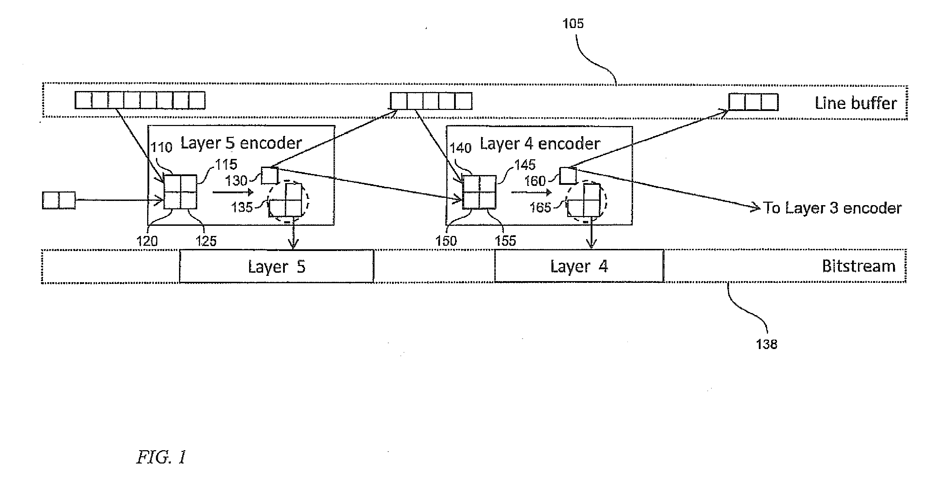

FIG. 1 shows a block diagram of a codec (compression/decompression) system which compresses image data into 5 layers, referred to as enhanced layer 5, enhanced layer 4, enhanced layer 3, enhanced layer 2, and enhanced layer 1, or simply layer 5, layer 4, layer 3, layer 2, and layer 1. In this example, layer 5 contains the highest-resolution information; 2x2 blocks of pixels are encoded to form layer 5. Layers 4, 3, 2, and 1 contain increasingly reduced resolution data. Each layer of compressed data is generated by a corresponding encoder; together the encoders form a chain, with each encoder in the chain providing data to the output bit stream and also providing data to the next encoder in the chain.

Referring to FIG. 1, in one embodiment, image lines are pushed, one line at a time, into a line buffer 105. After the first line of an image, followed by the first two pixels of the second line of the image, are pushed into the buffer, a 2x2 (i.e., 2 by 2) block of pixels is present in the buffer. This 2x2 block of pixels includes the first two pixels 110, 115 of the first line of the image, and the first two pixels 120, 125 of the second line of the image. This block is transformed, by a transform which generates one low-frequency component 130 and three high-frequency components 135. For example, a Hadamard transform may be used, so that, if the pixel values for the four pixels 110, 115, 120, 125 in the 2x2 block are $a$, $b$, $c$, and $d$, respectively, the low-frequency component is given by

$$\frac{a+b+c+d}{2},$$

and the high frequency components are given by

$$\frac{a+b-c-d}{2},$$

$$\frac{a-b+c-d}{2},$$

and

$$\frac{a-b-c+d}{2}.$$

The high-frequency components 135 may be compressed, e.g., using entropy coding, forming layer 5 data, and placed into the output bit stream 138. The low-frequency component 130 may be pushed back into the line buffer.

Subsequent 2x2 image blocks are encoded until the first two lines of the image have been processed. The third image line may then be read into the line buffer, and processing of additional 2x2 blocks may begin as soon as the first 2 pixels of the fourth line have been read into the line buffer. Low-frequency components generated by transforming these 2x2 blocks may be sent directly to the layer 4 encoder. Once the first two 2x2 blocks within the 3rd and 4th image rows have been encoded, the line buffer contains the low-frequency components 140, 145 from the first two 2x2 blocks of the first two lines, and the layer 4 encoder stores the low-frequency components 150, 155 from the first two 2x2 blocks of the 3rd and 4th lines. The low-frequency components 140, 145 from the first two 2x2 blocks of the first two lines may be read into the layer 4 encoder, so that it contains the low-frequency components from this 2x2 set of 2x2 blocks, corresponding to a 4x4 region of pixels.

The layer 4 encoder then encodes this 2x2 set of low-frequency components, e.g., layer 4 encoder processes them with a transform, to obtain a low-frequency component 160 and 3 high-frequency components 165. The high-frequency components 165 may be compressed and placed in the output bit stream 138 forming layer 4 data, and the low-frequency component 160 may be pushed to the line buffer. The process of transforming 2x2 blocks in the layer 5 encoder may then resume until another 2x2 set of low-frequency components has been generated, which is then transformed in the layer 4 encoder. Operation of the layer 3, layer 2, and layer 1 encoders is similar, with each encoder using as input low-frequency components produced by the preceding encoder which may either store these low-frequency components in the line buffer or deliver them directly to the next encoder in the chain.

In these examples, the transform may be applied to pixels in an image block, such as one of the 2x2 blocks, or to an array of low-frequency components resulting from previously applied transforms, such as the four low-frequency components resulting from applying the transform to each of a 2x2 set of 2x2 blocks. In either case the input to the transform is referred to herein as a set, or array, of image elements. Thus, as used herein, image elements may be pixels, or they may be low-frequency components obtained by applying a transform to pixels or to image elements.

In one embodiment, additional lines in the image are processed as follows. For even lines, the 2x2 block of the current two pixels and two pixels above them from the line buffer are transformed into one low frequency value and three high frequency values. Then the three high frequency values are compressed into the enhanced layer 5, and the low frequency value is either pushed to the line buffer, or sent to layer 4 encoder if the line is an integer multiple of 4. Similarly, the layer 4 encoder runs on every 4th line, and the layer 3, 2, and 1 encoders run on every 8th, 16th, and 32nd lines, respectively. As the line buffer needed for each level is no more than half of the previous level, total buffer memory capable of storing 2 lines of pixels is sufficient.

In other embodiments, NxN blocks of pixels (i.e., N by N blocks of pixels), where N may be greater than 2, are transformed by the first encoder. In this case N-1 lines, and N pixels of the Nth line, are read into the buffer, before the first encoding step is conducted. In each case, the initial encoding step encodes an NxN block of the image. The encoding of an NxN image block results in one low-frequency component and $N^{2-1}$ high-frequency components. The high frequency components are compressed, e.g., using entropy coding, and the low frequency component is initially pushed to the line buffer. A subsequent encoder in the chain may work with the same (NxN) block size, or with blocks of a different size, e.g., MxM.

The transform used need not be a Hadamard transform; it may be a discrete cosine transform (DCT), or a wavelet transform. In the case of a 2x2 block, the three transforms, i.e., the Hadamard transform, the DCT, and the wavelet transform, may differ only by a scaling factor. In the case of a larger block, such as a 16x16 block, the linear combinations of pixel values forming, for example, one of the high frequency components of the Hadamard transform may contain the pixel values in proportions not represented in any of the linear combinations of, e.g., a DCT. Thus, for larger blocks the choice of transform may affect the results of the encoding.

Implementations according to embodiments of the present invention use significantly less line buffer memory than, for example, a related art approach requiring that 31 full lines and 32 additional pixels be read into a line buffer before encoding of the first 32x32 block begins. Moreover, this related art approach must handle different block sizes at each level; embodiments of the present invention use the same transformation and encoding engines for each level, and they can be shared. One embodiment of the present invention uses a 2x2 transform at each level or layer; this transform may be particularly simple.

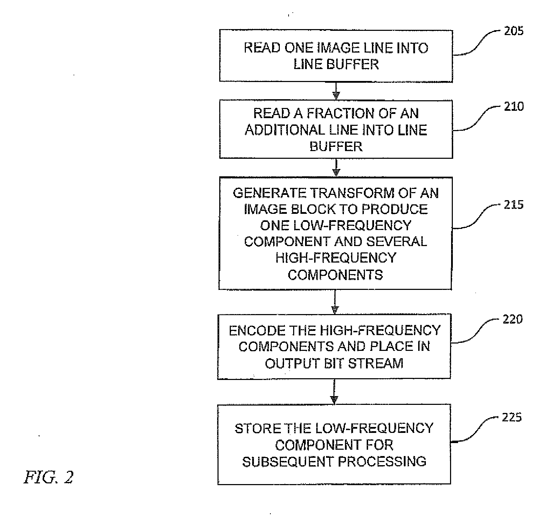

FIG. 2 shows a flowchart describing a method of encoding image data according to an embodiment of the present invention. In an act 205 an image line is read into the line buffer, and in an act 210 a portion of an additional image line is read into the line buffer. This portion may, for example, be composed of of two pixels of the additional image line, if a 2x2 block is to be transformed. In an act 215, a transform of an image block is formed, generating one low-frequency component and several high frequency components, where the number of high-frequency components generated is $N^{2-1}$ for an NxN block. In an act 220, the high-frequency components are encoded, e.g., using entropy coding, and placed in the output bit stream, and, in an act 225, the low-frequency component is stored, e.g., in the line buffer, or in the next encoder in the chain, for subsequent processing, e.g., by the next encoder in the chain.

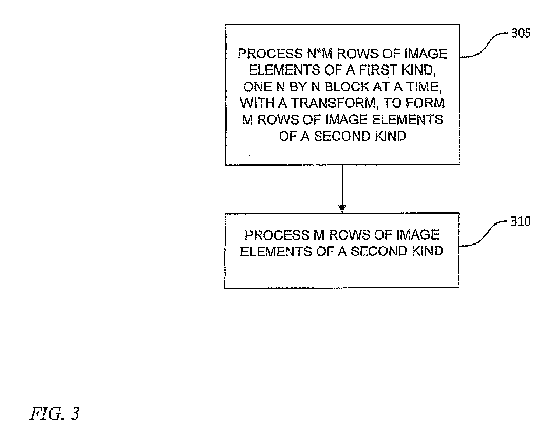

FIG. 3 shows acts executed by two consecutive encoders in the chain of encoders. In an act 305, an encoder may process N*M (i.e., N times M) rows of image elements of a first kind with a transform, to form M rows of image elements of a second kind, and in an act 310, which may be executed in part concurrently with, i.e., which may overlap in time with, the act 305, an encoder may process the M rows of image elements of the second kind with the transform. For example, if N and M are both 2, then in act 305, 4 rows of image elements of a first kind may be processed with a transform, one 2x2 block at a time, to form 2 rows of image elements of a second kind. The image elements of the second kind may be the low-frequency components of the 2x2 blocks. If the encoder is the first encoder in the chain, then the image elements of the first kind may be pixels, i.e., pixel values; otherwise they may be low-frequency components resulting from the application of the transform in a preceding encoder in the chain. In act 310, the M rows of image elements of the second kind may also be transformed, one 2x2 block at a time.

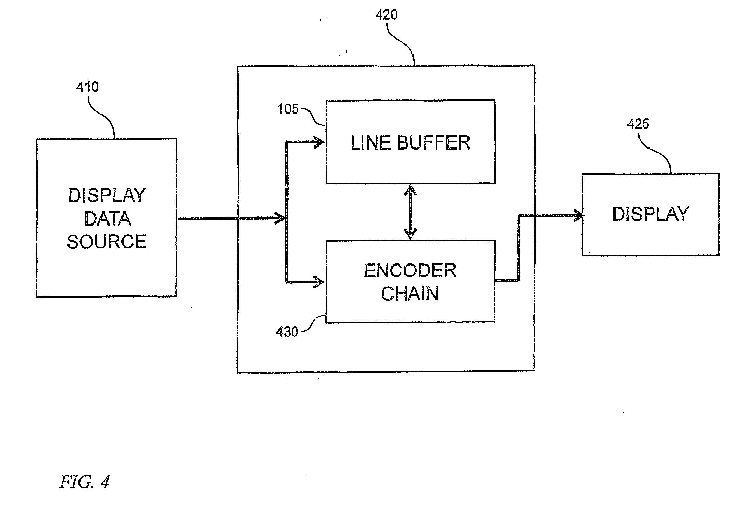

FIG. 4 shows a block diagram of a codec 420 according to an embodiment of the present invention, configured to encode video data from a source 410 of display data for transmission to a display 425. Data received by the codec may be stored temporarily in line buffer 105 or sent directly to encoder chain 430. Processing of the data from the source 410 and from the line buffer 105 by the encoder chain 430 may involve temporary storage of intermediate results in the line buffer 105. Encoded data are sent out to the display 425 by the encoder chain 430.

Elements of embodiments of the present invention may be implemented using one or more processing units. The term "processing unit" is used herein to include any combination of hardware, firmware, and software, employed to process data or digital signals. Processing unit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs).

Although exemplary embodiments of the hierarchical image and video codec have been specifically described and illustrated herein, many modifications and variations will be apparent to those skilled in the art. For example, although examples described herein relate to embodiments involving video data, related embodiments of the present invention may be practiced with individual images. Accordingly, it is to be understood that the hierarchical image and video codec constructed according to principles of this invention may be embodied other than as specifically described herein. The invention is also defined in the following claims, and equivalents thereof.

## Claims

1. A method for encoding an image, the method comprising:

    processing a plurality of rows of image elements of a first kind, one N by N block at a time, N being an integer greater than 1, with a transform, wherein the transform is configured to form a plurality of first high-frequency components and one first low-frequency component;
    for each N by N block, encoding the first high-frequency components and storing the first low-frequency component;
    processing the first low-frequency components, one M by M block at a time, M being an integer greater than 1, with the transform, wherein the transform is configured to form a plurality of second high-frequency components and one second low-frequency component; and
    for each M by M block, encoding the second high-frequency components and storing the second low-frequency component.

2. A method according to claim 1, wherein each image element of the first kind is a pixel value.

3. A method according to claim 1, wherein each image element of the first kind is a low-frequency component obtained by applying a transform to an array of pixel values.

4. A method according to claim 1, wherein the transform is a Hadamard transform.

5. A method according to claim 1, wherein the transform is a discrete cosine transform.

6. A method according to claim 1, wherein the transform is a wavelet transform.

7. A method according to claim 1, wherein at least one of M and N equals 2.

8. A method according to claim 1, wherein the encoding of the first high-frequency components comprises encoding the first high-frequency components with an entropy coding.

9. A method according to claim 1, wherein the encoding of the second high-frequency components comprises encoding the second high-frequency components with an entropy coding.

10. A method according to claim 1, wherein N equals 2, and wherein each N by N block comprises four image elements, including:

> a first image element;
> a second image element;
> a third image element; and
> a fourth image element.

11. A method according to claim 10, wherein the low-frequency component is a constant multiplied by the sum of the four image elements.

12. A method according to claim 10, wherein a high-frequency component is a constant multiplied by the difference between:

> the sum of the first image element and the second image element; and
> the sum of the third image element and the fourth image element.

13. A method according to claim 10, wherein a high-frequency component is a constant multiplied by the difference between:

> the sum of the first image element and the third image element; and
> the sum of the second image element and the fourth image element.

14. A method according to claim 10, wherein a high-frequency component is a constant multiplied by the difference between:

> the sum of the first image element and the fourth image element; and
> the sum of the second image element and the third image element.

15. A method according to one of claims 11 to 14, wherein the constant is one-half.

16. A system for encoding an image, the system comprising a processing unit configured to:

> process a plurality of rows of image elements of a first kind, one N by N block at a time, N being an integer greater than 1, with a transform, wherein the transform is configured to form a plurality of first high-frequency components and one first low-frequency component;
> for each N by N block, encode the first high-frequency components and store the first low-frequency component;

process the first low-frequency components, one M by M block at a time; M being an integer greater than 1, with the transform, wherein the transform is configured to form a plurality of second high-frequency components and one second low-frequency component; and

for each M by M block, encode the second high-frequency components and store the second low-frequency component.

FIG. 1

EP 2 787 737 A1

EP 2 787 737 A1

```
                                    READ ONE IMAGE LINE INTO          205
                                          LINE BUFFER

                                    READ A FRACTION OF AN             210
                                   ADDITIONAL LINE INTO LINE
                                           BUFFER

                                   GENERATE TRANSFORM OF AN
                                    IMAGE BLOCK TO PRODUCE            215
                                     ONE LOW-FREQUENCY
                                   COMPONENT AND SEVERAL
                                      HIGH-FREQUENCY
                                        COMPONENTS

                                   ENCODE THE HIGH-FREQUENCY          220
                                    COMPONENTS AND PLACE IN
                                      OUTPUT BIT STREAM

                                   STORE THE LOW-FREQUENCY            225
                                        COMPONENT FOR
                                   SUBSEQUENT PROCESSING
```

*FIG. 2*

PROCESS N*M ROWS OF IMAGE
ELEMENTS OF A FIRST KIND,
ONE N BY N BLOCK AT A TIME,
WITH A TRANSFORM, TO FORM
M ROWS OF IMAGE ELEMENTS
OF A SECOND KIND
— 305

PROCESS M ROWS OF IMAGE
ELEMENTS OF A SECOND KIND
— 310

*FIG. 3*

420

410

105

LINE BUFFER

425

DISPLAY
DATA
SOURCE

DISPLAY

ENCODER
CHAIN

430

*FIG. 4*

Europäisches
Patentamt

European
Patent Office

Office européen
des brevets

**EUROPEAN SEARCH REPORT**

Application Number

EP 14 16 2903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MALVAR H S: "MULTIRESOLUTION TRANSFORMS IN MODERN IMAGE AND VIDEO CODING SYSTEMS", PROCEEDINGS OF SPIE, S P I E - INTERNATIONAL SOCIETY FOR OPTICAL ENGINEERING, US, vol. 5439, no. 1, 14 April 2004 (2004-04-14), pages 15-23, XP001206311, ISSN: 0277-786X, DOI: 10.1117/12.548914 ISBN: 978-0-8194-9097-1 * pages 16-18 * * figures 1, 2, 3 * ----- | 1-16 | INV. H04N19/169 H04N19/122 H04N19/192 H04N19/645 |
| X | US 6 944 349 B1 (ONNO PATRICE [FR] ET AL) 13 September 2005 (2005-09-13) * figures 1, 6, 7 * * claims 1-3 * ----- | 1-3,6,16 | |

TECHNICAL FIELDS SEARCHED (IPC)

H04N

The present search report has been drawn up for all claims

| Place of search | Date of completion of the search | Examiner |
|---|---|---|
| Munich | 8 August 2014 | Di Cagno, Gianluca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 16 2903

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2014

| Patent document cited in search report | | Publication date | Patent family member(s) | | Publication date |
|---|---|---|---|---|---|
| US 6944349 | B1 | 13-09-2005 | FR | 2792432 A1 | 20-10-2000 |
| | | | JP | 4514169 B2 | 28-07-2010 |
| | | | JP | 2000350208 A | 15-12-2000 |
| | | | US | 6944349 B1 | 13-09-2005 |

EPO FORM P0459

For more details about this annex : see Official Journal of the European Patent Office, No. 12/82